# EUROPEAN PATENT APPLICATION

(11) **EP 4 814 060 A1**
(43) Date of publication of application: **30.09.2026**
(21) Application number: 26167103.6
(22) Date of filing: 24.03.2026
(51) Int. Cl.: C08L 95/00

(54) **STYRENIC BLOCK COPOLYMERS AND POLYMER MODIFIED BITUMEN THEREFROM**

(30) Priority: 25.03.2025 US 202563777036 P
(71) Applicant: Kraton Polymers Nederland B.V., 1322 CE Almere (NL)
(72) Inventor: BLACKWELL, JR., Richard I, Houston, 77084 (US); THOMPSON, Marsha N., Houston, 77084 (US); KENDRICK, Harriet JS, Houston, 77084 (US); CUCALON, Lorena Gracia, Houston, 77084 (US)
(74) Representative: Henkel & Partner mbB

(57) **Abstract**

The disclosure relates to a polymer-modified bitumen (PMB) composition comprising: (i) styrenic block copolymer (SBC) composition containing a radial block copolymer and a diblock copolymer, and (ii) a bitumen. In particular, the SBC composition is characterized by a controlled molecular architecture comprising a defined proportion of diblock and coupled radial block copolymer species, and a limited content of high molecular weight polymer (HMP). The SBC composition is optimized to have relatively low molecular weight diblock species and high molecular weight radial block copolymer species to achieve high performance bitumen properties with maximum efficiency and viscosity control.

## Description

### FIELD

The present disclosure relates to a polymer-modified bitumen composition comprising a styrenic block copolymer composed of a diblock copolymer and a radial coupled block copolymer, and methods of preparation thereof.

### BACKGROUND

Polymer-modified bitumen (or asphalt) for paving applications, along with methods for preparing various polymer-modified bitumen compositions, are well known in the art. Various polymers, including diene elastomers such as polybutadiene, ethylene-propylene-diene monomer (EPDM), ethylene-propylene rubber (EPR), and styrenic block copolymers (SBCs) such as styrene-butadiene-styrene (SBS) and styrene-isoprene-styrene (SIS), can be incorporated into bitumen to enhance its performance characteristics.

The use of SBCs to improve bitumen performance is well-established. Traditionally, achieving high-performance bitumen required the incorporation of low-molecular-weight SBCs at relatively high concentrations to attain the desired mechanical and rheological properties. However, this often results in increased viscosity and progressive viscosity changes ("drift") during storage, leading to handling challenges in both the binder and the final asphalt mixture. On the other hand, high-molecular-weight SBCs, even at lower concentrations, can exacerbate viscosity-related issues and, in some cases, may cause gelling in storage tanks during production.

There is still a need for an improved polymer composition that balances performance improvements with viscosity control, ensuring stability, processability, and long-term storage compatibility.

### SUMMARY

In one aspect, the disclosure relates to a polymer-modified bitumen (PMB) composition comprising, consisting essentially of, or consisting of 80 to 98% by weight of a bitumen component, 2 to 20% by weight of a styrenic block copolymer, the styrenic block copolymer based on total weight of the styrenic block copolymer comprising a mixture of (i) 25-60 wt.% of a diblock copolymer having a peak molecular weight Mₚ of 50-160 kg/mol, having an A-B structure, and (ii) 40-75 wt.% of a coupled radial block copolymer, having a peak molecular weight Mₚ of 200-550 kg/mol, and a structure selected from (A-B)n-X, (A-B-A)nX, (A-B)n-X-(B-A)m, and mixtures thereof. Each A block is a polymerized vinyl aromatic unit, each B block is a polymerized butadiene or isoprene unit, and B block has a vinyl content of 20 - 70 wt. % measured by ¹H NMR, n and m are independent integers from 1-25, and X is a residual of a coupling agent. The styrenic block copolymer has a polystyrene content of 25-45 wt.%, and a High Molecular-weight Polymer (HMP) content of less than 10 wt.%.

In a second aspect, the styrenic block copolymer is prepared in-situ in a polymerization reactor without isolating the diblock copolymer and is not a physical blend of separately prepared diblock and radial coupled block copolymers.

In a third aspect, the coupled radial block copolymer is a radial block copolymer having a (A-B)n-X structure.

In a fourth aspect, the coupled radial block copolymer has a coupling efficiency of 40-70%.

### DESCRIPTION

The following terms, used in the specifications, will have the following meanings:
"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C. In another example, at least one of A and B means A only, B only, as well as A and B.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Copolymer" refers to a polymer derived from more than one species of monomer.

"Block copolymer" refers to a copolymer that comprises more than one species of monomer, wherein the monomers are present in blocks. Each block is constituted of a set of monomer units different from the set of monomers of the connected surrounding blocks in the same block copolymer. Each block can be constituted of a homopolymer or a random copolymer.

"Polystyrene content" or "PSC" of a block copolymer refers to the weight % of vinyl aromatic, e.g., styrene, in the block copolymer, calculated by dividing the sum of molecular weight of all vinyl aromatic units by the total molecular weight of the block copolymer. PSC can be determined using any suitable methodology such as proton nuclear magnetic resonance (¹HNMR).

"Monovinyl arene," "monoalkenyl arene," or "vinyl aromatic" refers to an organic compound containing a single carbon-carbon double bond, at least one aromatic moiety, and a total of 8 to 18 carbon atoms. Examples include styrene, o-methylstyrene, p-methylstyrene, p-tert-butylstyrene, 2,4-dimethylstyrene, α-methylstyrene, vinylnaphthalene, vinyltoluene, vinylxylene, and mixtures thereof. In embodiments, the monoalkenyl arene block comprises a substantially pure monoalkenyl arene monomer. In embodiments, styrene is the major component with minor proportions if present (less than 10 wt. %) of structurally related vinyl aromatic monomers such as o-methylstyrene, p-methyl styrene, p-tert-butyl styrene, 2,4- dimethyl styrene, a-methylstyrene, vinylnaphthalene, vinyltoluene, vinylxylene or combinations thereof.

"Molecular weight" or Mw refers to the polystyrene-equivalent weight-average molecular weight (g/mol) of a polymer block or a block copolymer. Mw can be determined by gel permeation chromatography (GPC) using polystyrene calibration standards, in accordance with ASTM 5296. The GPC detector can be an ultraviolet detector, a refractive index detector, or a combination thereof. The chromatograph is calibrated using commercially available polystyrene molecular weight standards. Mw values measured using such calibration are polystyrene-equivalent molecular weights or apparent molecular weights. GPC analysis further provides a molecular weight distribution from which a peak molecular weight (Mp), corresponding to the maximum of the GPC trace, can be determined. Unless otherwise specified, references to peak position and relative molecular weight comparisons between polymer species are based on Mp values and corresponding elution times.

"Coupling efficiency" refers to the weight of molecules of coupled polymer divided by the weight of molecules of coupled polymer plus the weight of molecules of uncoupled polymer. For example, if a coupling efficiency is 80%, then the polymer contains 20 wt.% of diblock and 80 wt.% of triblock and multi-arm blocks.

"Unit" when used in the concept of polymer unit or copolymer unit refers to repeating building blocks constituting the considered polymer or copolymer. Those polymer units are usually directly or indirectly related to the monomers that were polymerized or copolymerized to produce the polymer or copolymer.

"Diblock copolymer" refers to a block copolymer having two distinct polymer blocks arranged in an A-B structure. In the context of the present disclosure, the term may also refer to the proportion of uncoupled A-B species present in the composition.

"Liquid asphalt" and "bitumen" are used interchangeably to mean both natural and manufactured forms of the substance.

"Asphalt" (Europe) or "Asphalt Mix" (US) refers to a mixture of aggregate fractions and bituminous binder as base material for bound layers of the road structure.

"Polymer-Modified Asphalt" or PMA is usually used in the US, while "Polymer-Modified Bitumen" or PMB is usually used in Europe, referring to a bituminous binder, such as a 'polymer modified bituminous' or 'polymer modified asphalt' binder.

"MSCR" refers to Multiple Stress Creep and Recovery. In MSCR testing, parameter %R or "% Recovery" means the percentage of recoverable strain, which is used to evaluate the elastic recovery of a polymer modified bitumen (PMB). MSCR test can be measured by ASTM D7405.

"% Recovery" provides a measure of the effectiveness of a polymer in a PMB under a given shear stress, measured using MSCR test as per ASTM D7405 test method. The % R value is defined by Eq (1): $% R = 100 * \left(Recoverable shear strain/Peak strain\right)$ wherein the recoverable shear strain is given by the difference between the peak shear strain and the non-recoverable shear strain. The MSCR test is also a standard way to assess the rut resistance, especially at high temperatures, of an asphalt mix produced using the PMB. For comparing the effectiveness of a given PMB versus a reference bituminous material, the parameter %R may be used as described above.

"Jnr" (non-recoverable creep compliance) refers to the ratio of the non-recoverable strain to the applied stress in a material subjected to a creep and recovery test, typically measured in units of kPa⁻¹. It quantifies the extent to which a material permanently deforms under sustained stress and is commonly used to evaluate the rutting resistance of asphalt binders in the Multiple Stress Creep and Recovery (MSCR) test. Lower Jnr values indicate better resistance to permanent deformation.

"Partial kill" refers to a controlled method of terminating polymer chain growth during the synthesis of block copolymers, particularly in the production of radial or star-shaped polymers. This involves introducing a terminating agent to halt the polymerization process partially. The terminated chains are not able to couple; thereby, achieving the desired coupling efficiency.

The disclosure relates to a polymer-modified bitumen (PMB) composition comprising: (i) styrenic block copolymer (SBC) composition containing a radial coupled block copolymer and a diblock copolymer, and (ii) a bitumen. In particular, the SBC composition is characterized by a controlled molecular architecture comprising a defined proportion of diblock and coupled radial block copolymer species, and a limited content (not > 10%) of high molecular weight polymer (HMP). The SBC composition is optimized for high performance bitumen properties with maximum efficiency and viscosity control.

Styrenic Block Copolymer (SBC): The SBC is a mixture of a diblock and a radial coupled block copolymer prepared in situ within a polymerization reactor without isolating intermediate diblock copolymers, and is not a physical blend of separately prepared diblock and radial coupled block copolymers. The SBC comprises a block copolymer having: i) a radial coupled block copolymer structure, and ii) a diblock copolymer structure A-B. In embodiments, the radial coupled block copolymer is represented by structure selected from (A-B)ₙ-X, (A-B-A)nX, (A-B/I/S-A)nX, (A-B)n-X-(B-A)m, (A-B)n-X-(A)m, and mixtures thereof, wherein n and m are independent integers from 1-30 and X is a coupling agent residue. "I" is isoprene. "S" is styrene. In embodiments, the coupled radial block copolymer has a number of arms between 1-30, or 1-20, or 1-10, or 1-7, or 1-5 and a coupling efficiency of 30-80%, or 40-70%, or > 30%, or > 40 %, or > 45, or < 80 %.

High Molecular Weight Polymer (HMP). In embodiments, the SBC further comprises one or more High Molecular Weight Polymer (HMP) populations. As used herein, the HMP consists of coupled radial block copolymer species belonging to the same coupled radial block copolymer architecture described above. Within the molecular-weight distribution of this coupled radial block copolymer architecture, as determined by gel permeation chromatography (GPC), there exists a principal population, which is the most abundant peak for that architecture in the SBC, and one or more higher-molecular-weight peaks or shoulders. The HMP comprises coupled radial block copolymer chains corresponding to any such higher-molecular-weight peak or shoulder, i.e., the same coupled radial block copolymer architecture as the principal population, with a peak molecular weight (Mp), measured by GPC, that is at least 5%, or at least 10% greater, or 5-100% greater than the Mp of the principal population. Multiple HMP populations may be present in the SBC.

In embodiments, the styrenic block copolymer (SBC) comprises: 10-80 wt.%, or 20-70 wt. %, or 25-65 wt.%, or 25 - 60 wt. %, or 30-60 wt.%, or 30-50 wt.% of a diblock copolymer (A-B) and 20-90 wt.%, or 30-80 wt.%, or 35-75 wt. %, or 40-75 wt. %, or 40-70 wt. %, or 50 - 70 wt.% of a coupled radial block copolymer, each percentage based on the total weight of the SBC.

In embodiments, the total HMP content is less than 10 wt.%, or less than 9 wt.%, or less than 8 wt. %, or less than 7 wt. % of the SBC. In some embodiments, the HMP content is from 0.1 to 10 wt.%, or from 0.5 to 9 wt.%, or from 1 to 8 wt.%, or from 1 to 7 wt.%, based on the total weight of the styrenic block copolymer.

Each block A is a vinyl aromatic block having similar or different molecular weight, with styrene as a major component and structurally related vinyl aromatic monomer as a minor component in mixture, which may be optional. In embodiments, the structurally related vinyl aromatic monomer is selected from the group of o-methylstyrene, p-methylstyrene, p-tert-butylstyrene, 2,4-dimethylstyrene, α-methylstyrene, vinylnaphtalene, vinyltoluene, vinylxylene, 1,1-diphenylethylene, or combinations thereof.

In embodiments, each polymer block A has a molecular weight Mp of 5-25 kg/mol, or 10-25 kg/mol, or > 8 kg/mol, or < 25 kg/mol.

Each block B is a conjugated diene block, which may comprise any suitable conjugated diene. In embodiments, the conjugated diene is 1,3-butadiene monomer that is substantially pure monomer, or contains minor proportions, e.g., up to 10% by weight, of structurally related conjugated dienes, such as 2,3-dimethyl-1,3-butadiene, 1,3-pentadiene, farnesene, myrcene, isoprene, and 1,3-hexadiene. Alternatively, substantially pure butadiene can be used to prepare the conjugated diene blocks. In embodiments, vinyl aromatic monomer (units) can be introduced or copolymerized with 1,3-butadiene monomer and/or isoprene monomer by any order and in any distribution to form any of configurations as described. In embodiments, the conjugated diene block contains a residual coupling agent (X).

In embodiments, the polymer block B is derived from a conjugated diene monomer, wherein at least 90 wt. % of polymer block B is polymerized butadiene monomer.

In embodiments, block B has a vinyl content of 9-70 wt.%, 20-70 wt.%, 30-60 wt.%, or ≥ 20 wt. %, or ≥ 30 wt. % or ≤ 70 wt.%, or ≤ 60 wt.%, based on total polymerized conjugated diene monomer measured by 1HNMR.

In embodiments, the SBC has a vinyl aromatic content (e.g., polystyrene content) of 20-50 wt. %, 25- 45 wt.%, or 25- 40 wt.%, or 30-35 wt.%, or 25-35 wt.%, or > 20 wt.%, or < 45 wt.%, or < 40 wt. %, or < 35 wt.%, relative to the overall weight of the SBC.

In embodiments, the diblock copolymer has a molecular weight Mp of 50-160 kg/mol, 50-140 kg/mol, or 65-150 kg/mol, 60-125 kg/mol, or 75-125 kg/mol, or 85-115 kg/mol, or 75-100 kg/mol, or < 160 kg/mol, or < 150 kg/mol, or > 50 kg/mol, or > 65 kg/mol, or > 75 kg/mol, according to ASTM 5296-19.

In embodiments, the radial coupled block copolymer has a molecular weight Mp of 200-550 kg/mol, 240-500 kg/mol, or 300-500 kg/mol, or 350-450 kg/mol, or 300-400 kg/mol, or < 550 kg/mol, or < 500 kg/mol, or > 200 kg/mol, or > 300 kg/mol measured according to ASTM 5296-19.

In embodiments, the SBC is present in an amount of 2- 20 wt.%, or 2-15 wt.%, or 2-10 wt.%, or > 2 wt.%, or > 3 wt.%, or > 5 wt.%, or < 12 wt.% based on the total weight of the PMB composition.

Bitumen Component: The PMB composition further comprises a bitumen (bituminous) component, which is a naturally occurring bitumen or derived from a mineral oil. Petroleum pitches obtained by a cracking process and coal tar can be used as a bituminous component as well as blends of various bituminous materials. Examples of suitable components include distillation or "straight-run bitumens", precipitation bitumens, e.g. propane bitumens, blown bitumens, e.g. catalytically blown bitumen or multigrade, and mixtures thereof. Other bituminous components include mixtures of bitumens with extenders (fluxes) such as petroleum extracts, e.g. aromatic extracts, distillates or residues, or with oils. Suitable bituminous components (either "straight-run bitumens" or "fluxed bitumens") are those having a penetration in the range of 50 to 250 dmm at 25° C.

In embodiments, bitumen is present in an amount of 80-98 wt. %, or 85-98 wt.%, or 90-98 wt.%, or 85-95 wt. %, > 80 wt. %, or < 98 wt. %, or < 97 wt.%, or < 95 wt. % based on the total weight of the PMB composition.

Optional Components: The bituminous composition optionally includes additional components including, e.g., fillers (such as talc, calcium carbonate and carbon black), resins, oils, waxes, stabilizers, cross-linking agent, or flame retardant. A variety of additives can be used in combination with the block copolymers to form the PMB composition. Examples include non-polymeric additives, non-reactive polymers, and reactive polymers. Non-polymeric additives include acid-based additives, flux oils, liquid plasticizers, hydrogen sulfide scavengers, amine scavengers, acid anhydrides, such as linear and cyclic anhydrides, sulfur sources, and combinations thereof. Examples of acid-based additives include one or more of the phosphorus acids, and polyphosphoric acid.

Flux oils encompass many types of oils used to modify asphalt and are the final products in crude oil distillation. They are non-volatile oils that are blended with asphalt to soften them. They can be aromatic, paraffinic, or naphthenic. Flux oils can also be any renewable-produced vegetable or bio-oil. Blends of two or more flux oils can also be used. Flux oils can also be recycled, either mineral or bioderived.

Examples of cross-linking agents include elemental sulfur, thiuram disulfides, sulfenamides, benzothiazole derivatives or polysulfides, dicumyl peroxide (DCP), benzoyl peroxide (BPO), t-butyl peroxide (TBP), or cumene hydroperoxide (CHP), phenolic resins, polyphosphoric acid (PPA), and dihydroxybenzenes.

In embodiments, the optional components are present in an amount of 0 to 40 wt. %, or < 40 wt. %, or < 35 wt. %, or < 30 wt. %, or < 20 wt.%, or < 15 wt. %, or < 5 wt. %, or < 2 wt.% based on the total weight of the PMB composition.

Styrenic Block Copolymer (SBC) Preparation: The block copolymer can be prepared by anionic polymerization of vinyl aromatic and conjugated diene monomers

In embodiments of an anionic polymerization, the block copolymer is made by first adding a vinyl aromatic monomer to form a first A block, then adding a diene monomer to form a B block for the formation of the diblock copolymer having the A-B structure. In the next step, additional vinyl aromatic monomer (same or different monomer, e.g., A or A') is added to obtain a sequential linear block copolymer with the general structure A-B-A or A-B-A'.

The typical anionic polymerization is carried out with an organo-alkali metal compound as the initiator / catalyst, in a suitable solvent at a temperature from 0-150°C, or 0 °C - 120 °C, or 30 -100 °C, or < 150 °C, or at ambient. Examples of anionic polymerization initiators include organolithium compounds having the general formula (R-Li)ₙ where R is an aliphatic, cycloaliphatic, aromatic, or alkyl-substituted aromatic hydrocarbon radical having from 1 to 20 carbon atoms, Li is lithium, and n has a value from 1 to 4. Preferred initiators include n-butyl lithium and sec-butyl lithium.

In embodiments for a coupled block copolymer having a (A-B)ₙ-X structure, the block copolymer is made by first polymerizing A block and then adding a diene monomer to form a B block. In the next step the resultant diblock "A-B⁻Li⁺" is reacted with a coupling agent to form a coupled block copolymer of the formula (A-B)ₙ-X, where n ≥1 and X is coupling agent. The final coupled product will contain a mixture of uncoupled diblock polymer "A-B" and the desired coupled block copolymer. Controlled coupling to target a specific level of uncoupled diblock can be achieved through stoichiometric adjustments of the coupling agent and catalyst / initiator. Alternatively, a partial killing strategy may be employed to target the desired amount of uncoupled diblock.

In embodiments with an additional coupled block copolymer having a (A-B)ₘ-X structure, first the diblock A-B structure is made as described above. In the next step, the radial block copolymer is made by preparing (A-B⁻Li⁺) in the same reactor by polymerizing A followed by addition of a B block. In a separate reactor, (A'-B⁻Li⁺) is prepared by polymerizing A' followed by addition of a B block. In the next step, coupling agent is added to the mixture of diblock A-B, (A-B⁻Li⁺) and (A'-B⁻Li⁺) in a single reactor. The resultant product is a radial coupled block copolymer of the formula (A-B)ₙ-X-(B-A')ₘ, where n and m ≥ 1 and X being the coupling agent and a diblock copolymer having A-B structure.

In embodiments, a controlled coupling efficiency of 20-80%, or 30-80%, or 40-70 wt.% is achieved via a stochiometric approach. The amount of coupling agent employed relative to the amount of living polymer A-B-Li+, depends on the desired degree of coupling and the properties of resulting coupled polymer. The coupling efficiency and the diblock content after coupling is driven by the ratio between two mole contents, e.g., i) the moles of living chains corresponding to the amount in mole of A-B-Li+, and ii) the moles of reactive sites available within the coupling agent. In embodiments, the ratio between the two mole contents is ranging from 0.08 to 1 mol, or 0.08 to 0.75 mol, or 0.125 to 0.75 mol, or 0.25 to 0.6 mol, or > 0.125 mol or < 0.75 mol. The coupling reaction can be at a wide temperature range and often the same as the polymerization temperature, e.g., from 0 -150 °C, or 30-100 °C, or 40-80 °C. The coupling reaction is normally carried out by mixing the coupling agent, neat or in solution, with the living polymer solution. The reaction period ranges from 1-90 minutes. After coupling the coupled block copolymer is isolated and characterized. This controlled coupling allows for the fine-tuning of the diblock content and the physical properties of the resulting polymer.

In embodiments, a controlled coupling efficiency of 20-80%, or 30-80%, or 40-70 wt.% is achieved via a partial kill approach. By adding a specific amount of terminating agent prior to or during the coupling step, a portion of the living polymer chain is deactivated, preventing them from participating in the coupling process. This controlled termination allows the fine-tuning of the diblock content and the physical properties of the resulting polymer.

Partial kill method refers to a controlled approach of terminating polymer chain growth during the synthesis of block copolymers, particularly in the production of radial or star-shaped polymers. In synthesizing radial block copolymers, the process typically begins with the formation of living polymer chains, each possessing reactive ends. These chains are then linked together using a coupling agent to form a multi-armed, star-like structure. Before the coupling step, a partial kill is performed by quenching a fraction of the living polymer chains with a terminating agent, e.g., methanol or another proton donor. This results in some polymer chains retaining their living ends, while others are capped as inactive, non-reactive chains. When the coupling agent is added, only the remaining living chains participate in the coupling reaction, leading to a mixture of coupled (radial) and uncoupled (diblock) polymers, for a "controlled" coupling efficiency (e.g., the percentage of living chains that successfully couple to form the radial polymer).

In embodiments, the coupling agent is selected from di- and multi-functional molecules able to couple living anionic polymers, e.g., methoxysilanes, or halogenated silanes, epoxies, adipates, benzoates, dimethyldimethoxysilane, tetramethoxysilane, dimethyldichlorosilane, methyl trimethoxy silane, di-ethyl-adipate, and mixtures thereof.

Preparation of the PMB: The PMB compositions can be prepared by mixing the SBC containing a radial block copolymer and a diblock copolymer with a bitumen and optional components. In embodiments, the PMB composition comprising 2- 20 wt.%, or 2-15 wt.%, or 2-10 wt.%, or > 2 wt.%, or > 3 wt.%, or > 5 wt.%, or < 12 wt.% of SBC, 80-98 wt. %, 85-98 wt.%, or 90-98 wt.%, or 85-95 wt. %, > 80 wt. %, or < 98 wt. %, or < 97 wt.%, or < 95 wt. % of a bitumen, and optionally 0 to 40 wt. %, or < 40 wt. %, or < 35 wt. %, or < 30 wt. %, or < 20 wt.%, or < 15 wt. %, or < 5 wt. %, or < 2 wt.% of at least one optional component. Any type of bitumen as described above can be used for making the PMBs. This can be advantageous in a situation where there may be variability in the quality/composition/source of the bitumen.

In an embodiment, the SBC and at least one base bitumen are first mixed, then optionally a sulfur-based crosslinker is added to the mixture. Optionally an acid-based additive can be introduced. The resulting mixture is blended at a temperature range of 140 °C to 220 °C, or > 150°C, or < 200 °C to make the PMB. A high-shear milling process or a low-shear mixing process, as known in the art, can be used.

Properties of the Polymer-modified bitumen (PMB): In embodiments, the PMB composition containing a mixture of a radial block copolymer and a diblock copolymer, has at least one of the following properties at a polymer loading of 2-20 wt. %:
a Multiple Stress Creep Recovery (MSCR), % R at 3.2kPa and 76 °C of at least 70%, at least 80%, or at least 90 %, measured according to AASHTO-T350;
a Jnr value at 3.2kPa and 76 °C of less than 1.0 kPa⁻¹, less than 0.5 kPa⁻¹, or less than 0.1 kPa⁻¹ , measured according to AASHTO-T350;
a rotational viscosity of < 5 Pa.S, or < 4 Pa.S, or < 3 Pa.S. or < 2 Pa.S, at 135 °C, measured according to AASHTO-T316;
a softening point of > 60 °C, or >70 °C, or >80 °C, or >90 °C, or >100°C measured according to ASTM D36; and
a penetration at 25°C of at least 15 units, or > 20 units, or < 100 units, or < 70 units, or < 65 units, or < 60 units, or < 50 units, or < 45 units, or < 40 units, or 15-100 units, or 15-65 units, or 15-50 units, or 15-40 units.

Applications: In embodiments, the SBC is used in applications including adhesives, sealants, paving, and roofing. In paving applications, the SBC is used in polymer-modified bitumen (PMB) to improve performance while maintaining viscosity control.

The PMBs are for use in applications including but are not limited to asphalt pavement and roofing. Examples include road pavement materials for new pavements, for pavement preservation and for pavement rehabilitation, in the form of hot mix asphalt, cold mix asphalt, warm mix asphalt, emulsified bitumen-based asphalt (chip seals, slurry seals, fog seals among others), bituminous crack fillers, and tack coat layers.

The PMBs are also valuable for use in roofing applications, where a combination of relatively low viscosity, low penetration and high softening point Tₛₚ, are desired. Examples include modified bituminous membranes, self-adhesive membranes, impact resistant shingles, laminates, shingle tab adhesives, shingle body, sheets, or roll products (roll roofing) as well as mopping asphalt or mastic asphalt applications.

Outside of paving and roofing applications, other applications include but not limited to pipe coatings, cable coating or insulation, sealants, sound damping membranes, carpets or railroad constructs.

Analytical Methods: The structural and compositional parameters recited herein can be determined using analytical techniques known in the art as described below. Where the styrenic block copolymer is incorporated into a polymer-modified bitumen (PMB) composition, the polymer can be isolated prior to analysis by solvent extraction methods that remove bitumen components without altering the covalent structure, molecular weight distribution, or architecture of the polymer.

The amount of styrenic block copolymer present in the PMB composition (e.g., 2-20 wt.%) can be determined gravimetrically following selective solvent extraction and drying of the recovered polymer to constant weight.

The distribution of molecular weight species of the styrenic block copolymer can be determined by gel permeation chromatography (GPC) using refractive index detection. Chromatographic regions corresponding to lower molecular weight diblock species and higher molecular weight coupled radial species are identified and integrated to determine their respective weight percentages. This analysis permits determination that: a) the diblock copolymer is present in an amount of 25-60 wt.% and exhibits a peak molecular weight (Mp) of 50-160 kg/mol; and b) the coupled radial block copolymer is present in an amount of 40-75 wt.% and exhibits a peak molecular weight (Mp) of 200-550 kg/mol. Peak molecular weight (Mp) corresponds to the molecular weight at the maximum of the chromatographic peak and can be determined using GPC calibrated with polystyrene standards in accordance with ASTM D5296 or an equivalent method.

Polymer architecture of the higher molecular weight fraction can be evaluated using GPC in combination with multi-angle light scattering (MALS), intrinsic viscosity measurements, or rheological characterization. Coupled radial block copolymers exhibit molecular size scaling behavior relative to molecular weight that differs from linear diblock species and is consistent with branched or multi-arm architectures selected from (A-B)ₙ-X, (A-B-A)ₙ-X, (A-B/I/S-A)ₙX, (A-B)ₙ-X-(B-A)ₘ, (A-B)ₙ-X-(A)ₘ, and mixtures thereof.

The vinyl content of the polymerized butadiene or isoprene block (20-70 wt.%) can be determined using proton nuclear magnetic resonance (¹H NMR) by integrating signals corresponding to vinyl units relative to total diene-derived units. Polystyrene content (25-45 wt.%) can be determined using ¹H NMR by integrating aromatic proton signals corresponding to vinyl aromatic units relative to total polymer signals. Ultraviolet detection coupled with GPC can also be used to assess styrene distribution across the molecular weight range.

High molecular-weight polymer (HMP) content can be determined by GPC by identifying and integrating polymer eluting above a defined high molecular weight region corresponding to over-coupled, gelled, or excessively branched species. The HMP content is calculated as the weight percent of polymer in this region relative to the total polymer weight. In embodiments, the HMP content is less than 10 wt.% of the styrenic block copolymer.

Multi-detector GPC employing refractive index and ultraviolet detection can be used to assess compositional continuity across the molecular weight distribution. A continuous detector response across the chromatographic profile is consistent with formation of the styrenic block copolymer within a single polymerization system, whereas discrete populations can indicate independently formed polymer fractions.

Examples. The following examples are provided to illustrate the SBC and properties of the PMB made therefrom. In the examples:
"Jnr" means non-recoverable creep compliance.

"MSCR" means Multiple Stress Creep and Recovery.

Block Copolymer Examples (Ex. 1-9): The styrenic block copolymers (SBCs) used in Examples 1-9 have a polystyrene content of 30 wt.% and a coupling efficiency of 30-80%. The SBCs exhibit peak molecular weights (Mp) in the range of 350-450 kg/mol. The HMP (High Molecular-weight Polymer) has a molecular weight of at least 10% higher than the Mp of the corresponding radial block copolymer, and in some cases of 30% or more. The detailed molecular weights of the diblock and radial block components, vinyl contents, block distributions, and HMP contents for each SBC are provided in Table 1.

**Table 1**

| Polymer Example (Ex) | Mp *(A-B)₄-X (kg/mol) | Mp **(A-B) (kg/mol) | Vinyl Content of SBC (%) | Radial Block Content (%) | Diblock Content (%) | HMP (wt.%) |
|---|---|---|---|---|---|---|
| Comparative | 85 | 21 | 60 | 0 | 75 | N/A |
| Ex 1 | 350 | 88 | 50 | 30 | 70 | 1.9 |
| Ex 2 | 350 | 88 | 30 | 80 | 20 | 1.8 |
| Ex 3 | 350 | 88 | 40 | 80 | 20 | 1.7 |
| Ex 4 | 420 | 105 | 30 | 30 | 70 | 2.9 |
| Ex 5 | 420 | 105 | 50 | 30 | 70 | 3 |
| Ex 6 | 350 | 88 | 40 | 80 | 20 | 13.9 |
| Ex 7 | 350 | 88 | 50 | 80 | 20 | 9.3 |
| Ex 8 | 350 | 88 | 40 | 70 | 30 | 6.7 |
| Ex 9 | 350 | 88 | 40 | 60 | 40 | 6.5 |

| | | | | | | |
|---|---|---|---|---|---|---|
| * coupled radial block copolymer; **- diblock copolymer | | | | | | |

Table 2 summarizes the performance of Examples 1-9 when blended with a commercial base asphalt containing 0.1 wt.% elemental sulfur. For each sample, the table reports the blending time required to reach the MSCR performance thresholds of recovery > 90% and Jnr < 0.1 kPa⁻¹, as well as the final viscosity of the blend when those thresholds were achieved. The samples were blended for a maximum of 28 hrs., unless otherwise noted. These values provide a direct comparison of how different polymer structures and high-molecular-weight content influence the rate at which the target MSCR properties develop under the blending conditions used.

As shown in Table 2, "did not meet" means 90% R and 0.1 Jnr were not attained within 28 hrs. of blending. Specifically, Ex 1 with low molecular weight and high diblock content did not meet the criteria, whereas Ex 5-Ex 7 gelled during blending, indicating a lack of viscosity control. Ex. 5 has a high molecular weight and a high vinyl content, while Ex 6 and Ex 7 have high HMP (13.9 and 9.3%, respectively). In contrast, Ex 2, Ex 3, Ex 8, and Ex 9 met the MSCR criteria within 22 h, 11 h, 14 h, and 18 h, respectively. Ex. 2 indicates that low molecular weight and low vinyl content can result in extended blending time. Ex 4 can be contrasted with Ex 5 to show the impact of reducing vinyl content at the respective molecular weight and diblock content, resulting in a blend that did not gel but had excessively long blending time (29 hrs). For reference, the Comparative sample, representing an industry standard, achieved the criteria in 18 h at a higher 7.5 wt.% loading (HMP not applicable) with a final viscosity of 3.4 Pa·s. Collectively, the results indicate that optimized design with lower and moderately controlled HMP levels tend to support stable blending and timely development of MSCR performance at lower polymer loading relative to the industry standard.

**Table 2**

| Polymer Example (Ex) | % Total Loading | Blending Time (hrs.) to Meet MSCR Criteria | Final Viscosity |
|---|---|---|---|
| Comparative | 7.5 | 18 | 3.4 |
| Ex 1 | 5 | Did not meet | - |
| Ex 2 | 5 | 22 | 2.9 |
| Ex 3 | 5 | 11 | 3.8 |
| Ex 4 | 5 | 29 | 2.9 |
| Ex 5 | 5 | Gelled | - |
| Ex 6 | 5 | Gelled | - |
| Ex 7 | 5 | Gelled | - |
| Ex 8 | 5 | 14 | 2.8 |
| Ex 9 | 5 | 18 | 2.9 |

## Claims

1. A polymer-modified bitumen (PMB) composition comprising:
80 to 98 wt.% by weight of a bitumen component; and
2 to 20 wt.% by weight of a styrenic block copolymer comprising based on the total weight of the styrenic block copolymer:
(i) 25-60 wt.%, of a diblock copolymer having a peak molecular weight Mₚ of 50-160 kg/mol, having an A-B structure, and
(ii) 40-75 wt.% of a coupled radial block copolymer having a peak molecular weight Mₚ of 200-550 kg/mol, and a structure selected from (A-B)ₙ-X, (A-B-A)ₙ-X, (A-B/I/S-A)ₙX, (A-B)ₙ-X-(B-A)ₘ, (A-B)ₙ-X-(A)ₘ and mixtures thereof;
wherein,
each A block is a polymerized vinyl aromatic unit;
each B block is a polymerized butadiene or an isoprene unit, and B block has a vinyl content of 20 - 70 wt. % measured by ¹H NMR;
each I is an isoprene unit;
each S is a styrene unit;
n and m are independent integers from 1-25 and X is a residual of coupling agent; and
wherein the styrenic block copolymer has:
a polystyrene content of 25-45 wt.%; and
a High Molecular-weight Polymer (HMP) content of less than 10 wt.%, as described in the description.

2. The polymer-modified bitumen composition of claim 1, wherein the styrenic block copolymer is prepared in-situ in a polymerization reactor without isolating the diblock copolymer and is not a physical blend of separately prepared diblock and radial coupled block copolymers.

3. The polymer-modified bitumen composition of any of claims 1-2, wherein the High Molecular-weight Polymer content of the styrenic block copolymer is from 1 to 7 wt.%.

4. The polymer-modified bitumen composition of any of claims 1-2, wherein the coupled radial block copolymer has a (A-B)ₙ-X structure.

5. The polymer-modified bitumen composition of any of claims 1-2, wherein the coupled radial block copolymer has a peak molecular weight Mp of 300-400 kg/mol.

6. The polymer-modified bitumen composition of any of claims 1-2, wherein the diblock copolymer has a peak molecular weight Mp of 75-100 kg/mol

7. The polymer-modified bitumen composition of any of claims 1-2, wherein the B block has a vinyl content of 30-60 wt.% as measured by ¹H NMR.

8. The polymer-modified bitumen composition of any of claims 1-2, wherein the styrenic block copolymer has a coupling efficiency of 40-70%.

9. The polymer-modified bitumen composition of any of claims 1-2, wherein the coupling agent X is selected from: methoxysilanes, halogenated silanes, epoxy compounds, adipate esters, benzoate esters, dimethyldimethoxysilane, dimethyldichlorosilane, diethyl adipate, and mixtures thereof.

10. The polymer-modified bitumen composition of any of claims 1-2, wherein the polymer-modified bitumen is characterized as having:
a Multiple Stress Creep Recovery, % R, > 90 % at 76 °C, measured according to AASHTO-T350, 3.2 kPa;
a Multiple stress Creep Recovery Jnr of < 0.1 kPa⁻¹ at 76 °C, measured according to AASHTO-T350, 3.2 kPa; and
a rotational viscosity < 5 Pa.s. measured according to AASHTO-T316 at 135 °C.

11. The polymer-modified bitumen composition of any of claims 1-2, wherein the styrenic block copolymer comprises 50-75 wt.% of the coupled radial block copolymer.

12. The polymer-modified bitumen composition of any of claims 1-2, wherein the styrenic block copolymer has a polystyrene content of 25-35 wt.%.

13. A method of constructing a pavement comprising:
(a) providing the polymer-modified bitumen composition of any of claims 1-2; and
(b) mixing the polymer-modified bitumen composition with aggregate to form an asphalt mixture.

14. A method of producing a roofing product comprising:
(a) providing the polymer-modified bitumen composition of any of claims 1-2; and
(b) incorporating the polymer-modified bitumen composition into a roofing formulation to produce a roofing membrane or shingle.
